Europäisches Patentamt

European Patent Office

Office européen des brevets

(11) Numéro de publication: **0 035 068**
**A1**

## DEMANDE DE BREVET EUROPEEN

(21) Numéro de dépôt: **80200180.0**

(22) Date de dépôt: **29.02.80**

(51) Int. Cl.³: **F 24 D 11/00,** F 24 D 13/04, F 24 H 1/20, F 24 D 19/10, G 05 D 23/13

(43) Date de publication de la demande: **09.09.81**
**Bulletin 81/36**

(84) Etats contractants désignés: **AT BE CH DE FR GB IT LU NL SE**

(71) Demandeur: **ATELIERS DE CONSTRUCTIONS ELECTRIQUES DE CHARLEROI (ACEC) Société Anonyme, 54, Chaussée de Charleroi, B-1060 Bruxelles (BE)**

(72) Inventeur: **André, Jacques, 149, Chaussée de Louvain, B-1410 Waterloo (BE)**

(54) **Accumulateur de chaleur par réservoir d'eau.**

(57) L'invention concerne une installation de chauffage comportant un circuit de radiateurs (2) alimenté par un ou plusieurs chauffe-eau (9) de bonne capacité et dont la charge, assumée par des résistances électriques (10 et 11) s'opère principalement en régime de nuit, pendant lequel, sous le contrôle d'une minuterie (18), un circulateur (19) fonctionne en petite vitesse et une vanne à trois voies (3) réglable présente une ouverture réduite de la vanne d'arrivée d'eau chaude. Les calories accumulées sont restituées de façon économique par un système à régulation constitué par un thermostat extérieur (6) et un thermostat d'ambiance (12) agissant en concomitance sur la vanne à trois voies (3).

ACCUMULATEUR DE CHALEUR PAR RESERVOIR D'EAU.

Les installations de chauffage comprenant un circuit de radiateurs sont alimentés par des générateurs de chaleur à combustibles solides, liquides ou gazeux.

Ces installations de chauffage ont généralement, dans leur conception moderne, un faible volant d'inertie thermique et le maintien des radiateurs à une température constante demande une mise en marche fréquente des générateurs thermiques pour des périodes de fonctionnement de courte durée. Cette succession de mise en marche entraîne un mauvais rendement des générateurs thermiques travaillant presque toujours en phase de démarrage et les chocs thermiques successifs sollicitent sévèrement ces installations et les fatiguent prématurément.

Notre invention remédie à ces inconvénients. D'autre part, elle répond au souci de plus en plus préoccupant de réaliser des économies d'énergie. L'installation revendiquée dans cette invention comprend un important réservoir d'eau constitué d'un ou de plusieurs chauffe-eau de bonne capacité, isolés thermiquement et équipés de plusieurs résistances électriques disposées judicieusement à l'intérieur pour tirer un maximum de profit d'une alimentation en énergie électrique réalisée selon un programme pré-établi suivant deux régimes distincts: un régime de jour et un régime de nuit.

L'invention est exposée plus en détails à l'aide des figures 1, 2, 3, 4, 5 et 6 qui établissent la comparaison entre des installations classiques et celles revendiquées dans l'invention.

Les figures 1 et 2 schématisent des installations classiques.

Les figures 3, 4, 5 et 6 schématisent des installations suivant l'invention.

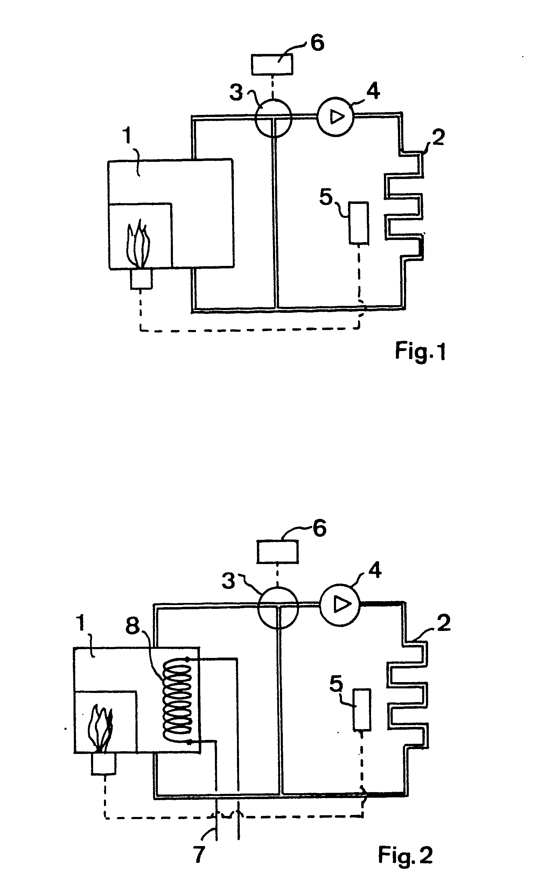

Dans la figure 1, un générateur thermique classique, par exemple une chaudière (1) est branché sur un circuit de radiateurs (2) par l'intermédiaire d'une vanne à trois voies (3). Cette installation comprend un circulateur (4), un thermostat d'ambiance (5) qui, selon les besoins du circuit de radiateurs (2) commande la mise en route ou l'arrêt du générateur thermique (1) et un thermostat extérieur (6) qui commande une vanne à trois voies (3) pour faire varier, en fonction de la température extérieure, les proportions d'eau chaude sortant du générateur thermique (1) et d'eau tiède revenant directement du circuit de

32.59/1788

radiateurs (2). La figure 2 fait apparaître, en plus de l'installation décrite ci-dessus, un circuit sanitaire (7) alimenté par un échangeur de chaleur (8).

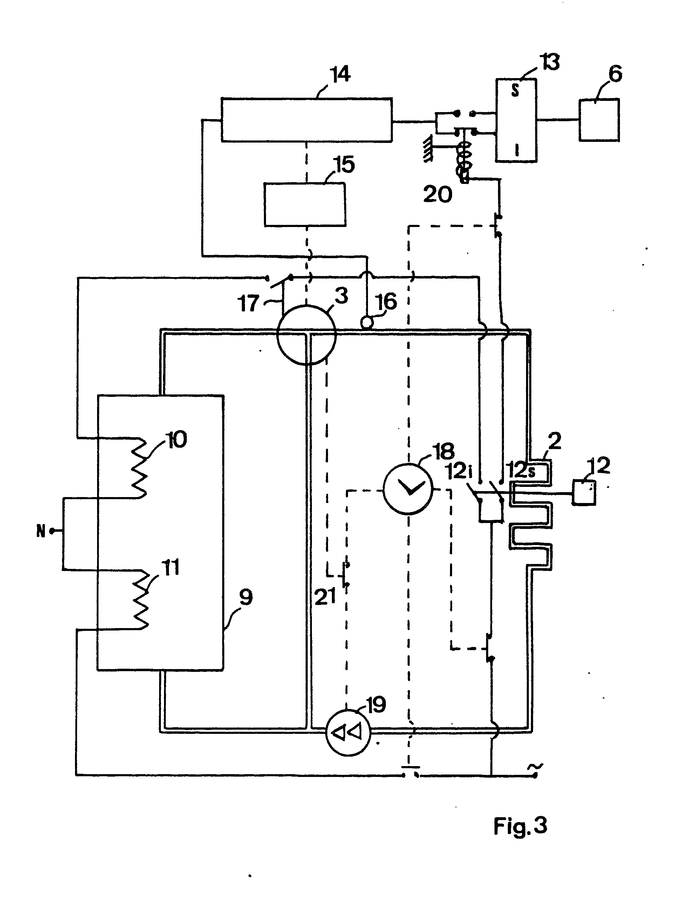

La figure 3 représente schématiquement une installation de chauffage par accumulation de chaleur dans un réservoir d'eau isolé constitué d'un chauffe-eau (9) équipé à sa partie supérieure d'une résistance électrique (10) et à sa partie inférieure d'une autre résistance électrique (11). Ce chauffe-eau (9) alimente un circuit de radiateurs (2) par l'intermédiaire d'une vanne à trois voies (3) modulée par un thermostat extérieur (6) et pilotée par un thermostat d'ambiance (12).

Dans l'installation selon l'invention, la vanne à trois voies (3) est commandée, à la fois, par un thermostat extérieur (6) faisant office de régulateur et par un thermostat d'ambiance (12) qui affine le réglage du régulateur.

Dans l'exemple de réalisation repris à la figure 3, le thermostat extérieur (6) commande la vanne à trois voies (3), en agissant sur l' ouverture de la vanne d'eau chaude en provenance du chauffe-eau (9), par l'intermédiaire d'un ensemble de régulation comprenant un générateur de fonction (13) , un comparateur (14) et un moteur (15).

Le générateur de fonction (13) engendre une double relation linéaire entre la température extérieur enregistrée par le thermostat extérieur (6) et la température de l'eau mesurée à la sortie de la vanne à trois voies (3) par un thermomètre (16).

Une première relation linéaire correspond au régime supérieur de la vanne à trois voies (3) c'est-à-dire au régime pour lequel l'ouverture de la dite vanne d'eau chaude de la vanne à trois voies (3) peut être totale.

Une seconde relation linéaire correspond au régime inférieur de la vanne à trois voies (3) c'est-à-dire au régime pour lequel l'ouverture de la dite vanne d'eau chaude peut être réduite au maximum.

Un thermostat d'ambiance (12) placé dans un local témoin choisit par l'intermédiaire d'un commutateur (20), la relation linéaire convenable du générateur de fonction (13).

Par l'action combinée du thermostat extérieur (6) et du thermostat d'ambiance (12) il résulte une température de consigne qui est introduite dans un comparateur (14) pour être comparée avec la température mesurée à la sortie de la vanne à trois voies (3) par le thermomètre (16). Le comparateur (14) agit sur la vanne à trois voies (3) par l'intermédiaire du moteur (15).

En adaptant automatiquement la température de l'eau circulant dans le circuit à radiateurs (2) en fonction de la température extérieure cet ensemble de régulation joue un rôle économique important en réalisant une économie sensible d'énergie sans sacrifier le confort de l'habitation.

Le thermostat d'ambiance (12) comporte deux étages de températures de consigne, distants l'un de l'autre d'un degré centigrade ou plus selon les caractéristiques recherchées pour l'installation. Ces deux étages de températures de consigne déterminent trois zones de températures et approprient la commande de la vanne à trois voies (3) en fonction de la zone de température dans laquelle se trouve la température du local témoin.

Une première zone de température correspond à des températures plus élevées que celle qui est affichée à l'étage supérieur des températures de consigne du thermostat d'ambiance (12).

Dans ce cas, les contacts électriques inférieur (12i) et supérieur (12s) du thermostat d'ambiance (12) sont ouverts et la proportion d'eau chaude fournie par le chauffe-eau (9) est réduite par la vanne d'arrivée d'eau chaude de la vanne à trois voies (3) qui se trouve ainsi en régime inférieur.

Une seconde zone de température correspond aux températures comprises entre les deux étages des températures de consigne du thermostat d'ambiance (12). Dans ce cas, le contact électrique inférieur (12i) du thermostat d'ambiance (12) est ouvert, le contact électrique supérieur (12s) du thermostat d'ambiance (12) est fermé et commande une plus grande ouverture de la vanne d'arrivée d'eau chaude de la vanne à trois voies (3) qui se trouve ainsi en régime supérieur.

Une troisième zone de température correspond à des températures inférieures à l'étage inférieur (12i) des températures de consigne du thermostat d'ambiance (12). Dans ce cas, le contact électrique supérieur (12s) du thermostat d'ambiance (12) est fermé et maintient en régime supérieur la vanne à trois voies (3) dont la vanne d'arrivée d'eau chaude, lorsqu'elle arrive en position d'ouverture totale, ferme un interrupteur de fin de course (17), le contact électrique inférieur (12i) du thermostat d'ambiance (12) est fermé et permet, en concomitance avec la fermeture de l'interrupteur de fin de course (17) de la vanne à trois voies (3), la relance du chauffe-eau (9), en période de jour, par alimentation en énergie électrique de la résistance électrique (10) montée à la partie supérieure du chauffe-eau (9).

L'utilisation d'un thermostat d'ambiance à action proportionnelle entre deux limites bien déterminées peut remplacer utilement le thermostat à deux étages de température de consigne en supprimant l'oscillation de la temparature de l'eau autour d'une température de consigne . Une minuterie (18) est actionnée par des signaux de commande émis par les sociétés distributrices d'électricité pour passer du régime de jour au régime de nuit ou inversément. Dès le début de la période de nuit cette minuterie (18) met en petite vitesse un circulateur à deux vitesses (19), place la vanne à trois voies (3) en régime inférieur, met hors circuit le thermostat d'ambiance (12) et permet l'alimentation en énergie électrique de la résistance électrique (11) placée dans la partie inférieure du chauffe-eau (9).

Selon les caractéristiques propres de l'installation, la résistance électrique (10) située à la partie supérieure du chauffe-eau (9) peut être alimentée pendant tout ou partie de la période du régime de nuit.

De préférence, avant la fin de la période de nuit, par exemple une heure avant, la minuterie (18) met en grande vitesse le circulateur à deux vitesses (19), remet en circuit le thermostat d'ambiance (12) et met la vanne à trois voies (3) en régime supérieure. A la fin de la période de nuit, située généralement à 6 heures, la minuterie (18) coupe les résistances électriques (10 et 11) de leur alimentation en énergie électrique. Pendant la période de jour, selon les besoins du circuit de radiateurs (2) détectés par le thermostat d'ambiance (12) une quantité variable d'eau chaude issue du chauffe-eau (9) est admise dans le circuit des radiateurs (2) par l'intermédiaire de la vanne à trois voies (3). Lorsque la température du local témoin est trop élevée et dépasse l'étage supérieur des températures à consigne du thermostat d'ambiance (12) le contact électrique supérieur (12s) s'ouvre et le contacteur (20) branche le générateur de fonctions (13) sur la relation linéaire correspondant au régime inférieur de la vanne à trois voies (3). Par comparaison entre la température ainsi consignée et la température mesurée par le thermomètre (16) placé à la sortie de la vanne à trois voies, le comparateur (14) commande le moteur (15) qui ferme progressivement l'ouverture de la vanne d'eau chaude de la vanne à trois voies (3). Il peut même arriver que pour des températures, trop élevées, relevées à la sortie de la vanne à trois voies (3) par le thermomètre (16) la vanne d'eau chaude de la vanne à trois voies (3) soit complètement fermée et que le circulateur à deux vitesses (19) soit mis hors circuit par le contact (21).

Lorsque la température du local témoin se refroidit et descend en dessous de l'étage supérieur des températures de consigne du thermostat d'ambiance (12) le contact électrique supérieur (12s) du thermostat d'ambiance (12) se ferme, le contacteur (20) branche le générateur de fonction (13) sur la relation linéaire correspondant au régime supérieur de la vanne à trois voies (3). Par l'intermédiaire de l'ensemble de régulation, la vanne à trois voies (3) s'ouvre pour admettre une plus forte proportion d'eau chaude venant du chauffe-eau (9) et augmente ainsi la température de l'eau circulant dans le circuit de radiateurs. De ce fait la température du local témoin augmente jusqu'à ce qu'elle dépasse à nouveau l'étage supérieur des températures de consigne du thermostat d'ambiance (12) et provoque une nouvelle ouverture du contact électrique (12s) entraînant à nouveau le processus de régulation exposé ci-dessous. Au fil des heures, l'eau chaude du chauffe-eau (9) s'épuise progressivement et il peut arriver que la température du local témoin descende sous l'étage inférieur des températures de consigne du thermostat d'ambiance (12) malgré une ouverture totale de la vanne d'eau chaude de la vanne à trois voies (3). Dès que la température du local témoin est inférieure à l'étage inférieur des températures de consigne du thermostat d'ambiance (12) le contact inférieur électrique (12i) du thermostat d'ambiance (12) se ferme et vient en concomitance avec la fermeture de l'interrupteur de fin de course (17) pour permettre l'alimentation en énergie électrique de la résistance (10) placée dans la partie supérieure du chauffe-eau (9).

De cette manière, seules les couches supérieures de la masse d'eau contenue dans le chauffe-eau (9) sont chauffées par la résistance électrique (10) réduisant ainsi au minimum l'appel d'énergie électrique pendant la période de jour.

En variante de la figure 3, on peut facilement concevoir une installation, non représentée, équipée d'un circuit sanitaire (6) alimenté au départ d'un échangeur 8 placé à l'intérieur du chauffe-eau (9).

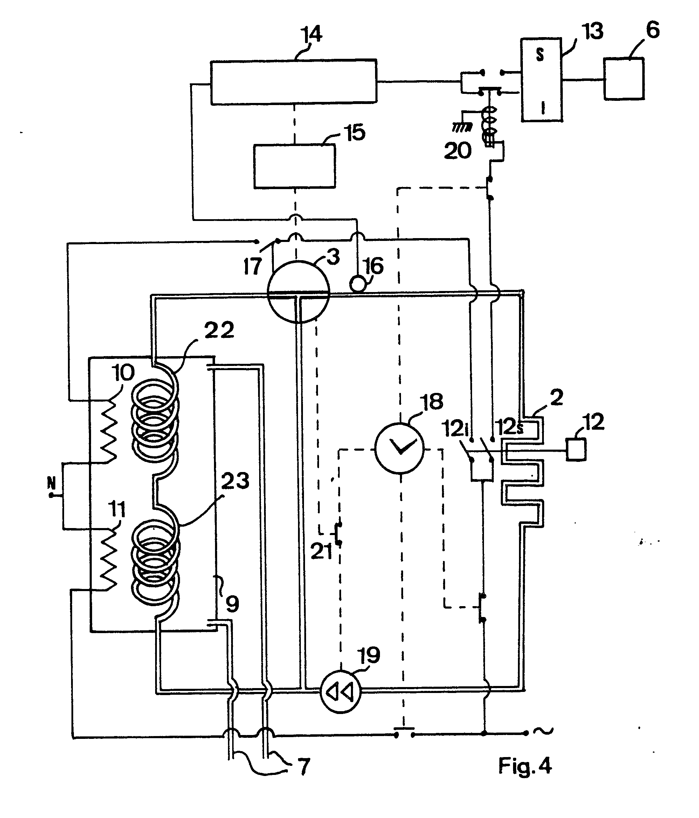

La figure 4 représente un chauffe-eau (9) équipé de deux échangeurs (22 et 23) qui alimentent le circuit de radiateurs (2). Dans cet exemple de réalisation, le circuit sanitaire (7) utilise l'eau emmagasinée dans le chauffe-eau (9). La régulation de cette installation se fait selon les mêmes principes et avec les mêmes composants que dans l'installation reprise à la figure 3.

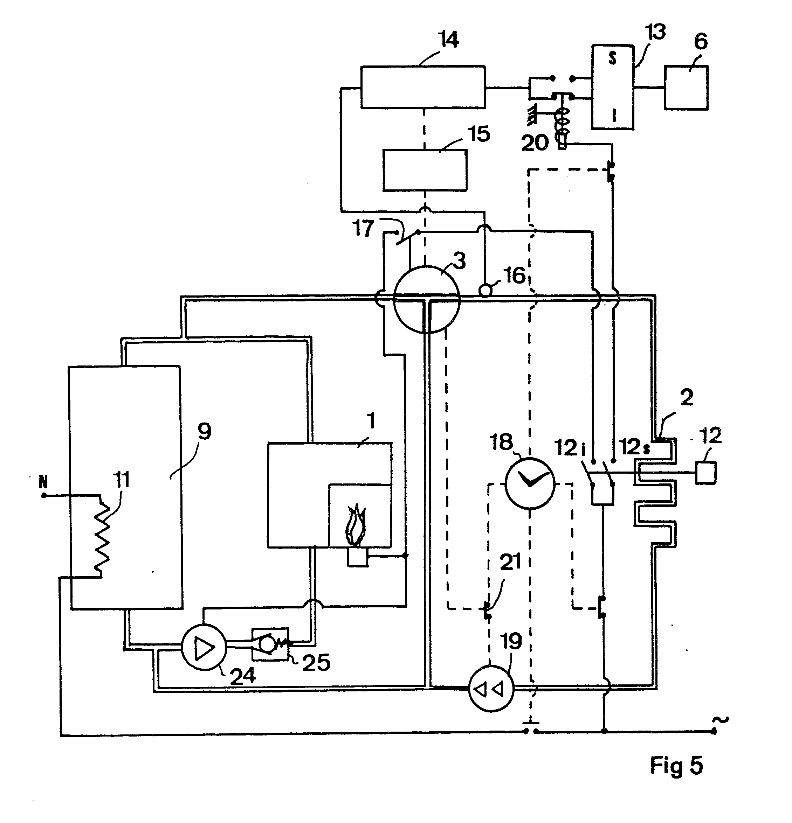

La figure 5 représente une solution mixte, dans laquelle la résistance électrique (10) située à la partie supérieure du chauffe-eau (9) présenté à la figure 3, est remplacée par un générateur thermique classique (1).

Dans cet exemple de réalisation schématisé à la figure 5, le générateur thermique classique (1) est monté en parallèle avec le chauffe-eau (9), équipé d'une résistance électrique (11) montée dans sa partie inférieure, le générateur thermique (1) et le chauffe-eau (4) sont réunis l'un à l'autre par un circuit auxiliaire comprenant un circulateur (24) et une soupape à pression différentielle (25).

L'ensemble de régulation est identique à celui des figures 3 et 4 et opère sur la vanne à trois voies (3) de la même façon que celle présentée pour ces figures.

Pendant le régime de nuit, la résistance électrique (11) chauffe l'eau contenue dans le chauffe-eau (9) le circulateur à deux vitesses (19) tourne en petite vitesse, la vanne d'eau chaude de la vanne à trois voies (3) est en régime inférieur et le thermostat d'ambiance (12) est hors circuit.

Le générateur thermique classique (1) et le circulateur (22) du circuit auxiliaire sont à l'arrêt.

Un certain temps avant la fin du régime de nuit, par exemple une heure avant la fin du régime de nuit, la minuterie (18) met en circuit le thermostat d'ambiance (12), place la vanne d'eau chaude de la vanne à trois voies (3) en régime supérieur et met en grande vitesse le circulateur à deux vitesses (19).

A la fin de la période de nuit la minuterie coupe l'alimentation en énergie électrique de la résistance (11) du chauffe-eau (9).

Dans les premières heures de la période de jour, l'eau chaude accumulée dans le chauffe-eau (9) suffit pour faire face aux besoins calorifiques du circuit de radiateurs (2).

Lorsque, après un certain temps, le chauffe-eau (9) a épuisé sa réserve d'eau chaude, la température du local témoin descend et le thermostat d'ambiance (12) ferme successivement le contact électrique supérieur (12s) puis le contact électrique inférieur (12i). Dès la fermeture du contact électrique supérieur (12s) du thermostat d'ambiance (12) la vanne d'eau chaude de la vanne à trois voies (3) s'ouvre progressivement. Lorsqu'elle atteint la position totalement ouverte, la vanne d'eau chaude de la vanne à trois voies(3) ferme l'interrupteur à fin de course (17) relié à la fois au générateur thermique classique (1) et au circulateur (24) du circuit auxiliaire. Toutefois le générateur thermique classique (1) et le circulateur (24) du circuit auxiliaire ne sont démarrés qu'à la fermeture du contact électrique inférieur (12i) du thermostat d'ambiance (12).

Dès la mise en marche du circulateur (24) la pression à l'entrée de la soupape à pression différentielle (25) est suffisante pour l'ouvrir et permettre la circulation de l'eau dans le générateur thermique (1) qui se met en fonctionnement. Dans une autre réalisation, le circulateur (24) et la soupape à pression différentielle (25) peuvent être remplacés par une pompe à engrenages ou tout autre dispositif susceptique, lorsqu'il est à l'arrêt, de résister à une surpression.

L'eau chaude produite par le générateur thermique classique (1) est ainsi répartie vers le circuit de radiateurs (2) et vers le chauffe eau (9) en quantités inversément proportionnelles aux pertes de charges des conduites respectives.

Compte tenu des faibles pertes de charges du circuit auxiliaire réunissant le générateur thermique classique (1) et le chauffe-eau (9), la majeure partie de l'eau réchauffée par le générateur thermique classique (1) va réalimenter le chauffe-eau (9) par sa partie supérieure, respectant ainsi la tendance naturelle dans la disposition des couches chaudes et froides de l'eau, tandis que le reste de l'eau chaude fournie par le générateur thermique (1) alimente le circuit de radiateurs (2). Cette disposition oblige le générateur thermique classique (1) a fonctionner pendant un temps beaucoup plus long que dans une installation classique avant que le thermostat d'ambiance (12) n'ouvre le contact électrique inférieur (12i) pour arrêter le générateur thermique classique (1) et le circulateur (24) du circuit auxiliaire.

D'autre part lorsque le contact électrique inférieur (12i) s'ouvre le chauffe-eau (9) est bien réalimenté en eau chaude et pourra répondre pendant un certain temps aux besoins calorifiques du circuit de radiateurs (2).

Il s'ensuit que le nombre de démarrages du générateur thermique classique (1) sont beaucoup moins nombreux et que la durée de fonctionnement du générateur thermique (1) est beaucoup plus longue que dans une installation classique. Un équilibre thermique peut ainsi se réaliser pour le générateur thermique (1) et participer grandement à l'amélioration de la combustion et à l'augmentation du rendement de l'installation.

D'autres dispositifs de régulation peuvent être appliqués à ces accumulateurs à chaleur par réservoir d'eau.

Dans un autre exemple de réalisation, on peut prévoir que, selon un choix volontaire, la résistance électrique (11) ou le générateur thermique (1) assure la relance pendant la journée. Cette réalisation présente l'avantage de pouvoir utiliser le chauffe-eau (9) comme élément de secours en cas de panne du générateur thermique (1).

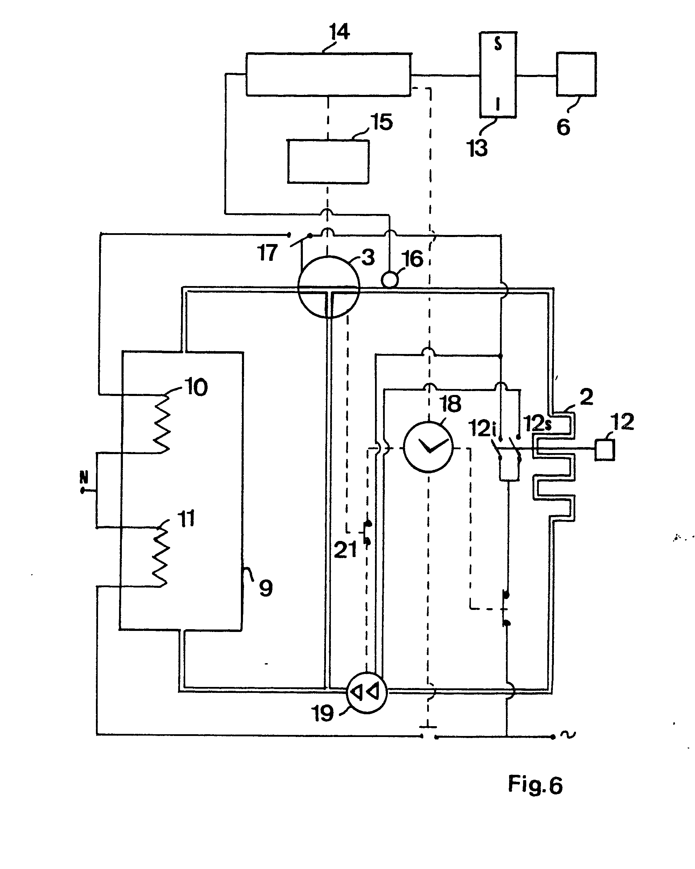

Dans la figure 6, un premier réglage de la température de l'eau circulant dans le circuit de radiateurs (2) est assurée par un thermostat extérieur (6) qui, en fonction de la température extérieur agit sur l'ouverture de la vanne d'arrivée d'eau chaude de la vanne à trois voies (3). Un second réglage de la température de l'eau circulant dans le circuit de radiateur est assurée par un thermostat d'ambiance (12) qui en fonction de la température du local témoin règle la vitesse de rotation d'un circulateur à plusieurs vitesses (19).

Dans le schéma de la figure 6, le rôle joué par la minuterie reste identique à celui décrit dans les figures 3, 4 et 5.

On peut aussi envisager une régulation simplifiée de l'installation dans laquelle la vanne à trois voies est remplacée par deux vannes à pression différentielle distinctes, placées respectivement à la sortie du chauffe-eau et dans la branche de dérivation de l'installation.

Lorsque, dans cette installation, non représentée, la température du local témoin est plus élevée que le niveau supérieur des températures de consigne du thermostat d'ambiance, le circulateur à plusieurs vitesses est mis à l'arrêt et les vannes à pression différentielle sont fermées. Lorsque la température du local témoin est comprise entre les deux niveaux de températures de consigne du thermostat d'ambiance, le circulateur est en petite vitesse et seule la vanne à pression différentielle placée dans la dérivation est ouverte.

Lorsque la température de local témoin est en dessous du niveau inférieur des températures de consigne du thermostat d'ambiance, le circulateur est en grande vitesse et les deux vannes à pression différentielle sont ouvertes.

1

## REVENDICATIONS

1. Installation de chauffage par accumulation de chaleur dans un réservoir d'eau dans laquelle de l'eau passant par le réservoir est mélangée à l'eau véhiculée dans au moins un circuit de radiateurs, caractérisée en ce que le réservoir d'eau est constitué d'au moins un chauffe-eau (9) comprenant une résistance électrique de chauffage.

2. Installation de chauffage par accumulation de chaleur dans un réservoir d'eau selon la revendication 1, caractérisée en ce que l'eau contenue dans au moins un chauffe-eau (9) est directement envoyée dans au moins un circuit de radiateurs (2).

3. Installation de chauffage par accumulation de chaleur dans un réservoir d'eau selon une des revendications 1 ou 2, caractérisée en ce que un circuit auxiliaire comprenant un générateur thermique classique (1) en série avec un circulateur (24) est relié en parallèle sur le chauffe-eau (9).

4. Installation de chauffage par accumulation de chaleur dans un réservoir d'eau selon une des revendications précédentes, caractérisée en ce que au moins un chauffe-eau (9) constituant le réservoir d'eau est équipé d'au moins un conduit échangeur (22 et 23) relié à au moins un conduit sanitaire (7).

5. Installation de chauffage par accumulation de chaleur dans un réservoir d'eau selon la revendication 3, caractérisée en ce que l'eau contenue dans au moins un chauffe-eau (9) en dehors d'au moins un conduit échangeur (22 ou 23), alimente un circuit sanitaire (6).

6. Installation de chauffage par accumulation de chaleur dans un réservoir d'eau selon une des revendications précédentes, caractérisée en ce que un circulateur à une ou plusieurs vitesses (19) est branché dans au moins un circuit de radiateurs (2) et en ce que une vanne réglable à trois voies (3) est branchée d'une part à une des extrémités d'au moins un circuit de radiateurs (2) et d'autre part à l'autre extrémité du dit circuit de radiateurs (2) et à l'entrée ou à la sortie d' au moins un chauffe-eau (9).

7. Installation de chauffage par accumulation de chaleur dans un réservoir d'eau selon une des revendications précédentes, caractérisée en ce que la vanne à trois voies est réglée en fonction d'un thermostat (6) sensible à la température extérieure et en ce que un thermostat
32.59/1788.

intérieur (12) agit sur au moins un élément de réglage (3 et/ou 19) de la température moyenne de l'eau dans le circuit des radiateurs (2).

8.   Installation de chauffage par accumulation de chaleur dans un réservoir d'eau selon une des revendications précédentes, caractérisée en ce qu'une minuterie (12) commande dans chaque circuit à radiateurs (2) la vitesse de rotation du circulateur à plusieurs vitesses (19), la mise en circuit du thermostat d'ambiance (5) et le régime de la vanne à trois voies (3).

9.   Installation de chauffage par accumulation de chaleur dans un réservoir d'eau selon une des revendications précédentes, caractérisée en ce que la mise en circuit des résistances électriques (10 et 11) du chauffe-eau (9) se fait pendant la nuit par l'intermédiaire d'une minuterie (18) et par l'intermédiaire d'un thermostat d'ambiance (12) et d'un interrupteur de fin de course (17) de la vanne à trois voies (3) pendant la journée.

10.   Installation de chauffage par accumulation de chaleur dans un réservoir d'eau selon une des revendications précédentes, caractérisée en ce que au moins un chauffe-eau (9) comprend au moins une résistance électrique (11) disposée à l'intérieur du chauffe-eau (9) et mise en circuit pendant la période de nuit par une minuterie (18) et en ce que au moins un chauffe-eau (9) comprend au moins une résistance électrique (10) disposée à l'intérieur du chauffe-eau (9) et mise en circuit en fin de période de nuit et pendant la journée par le thermostat d'ambiance (12) et l'interrupteur de fin de course (17) à la vanne à trois voies (3).

Fig.1

Fig.2

Fig.3

2/5

0035068

Fig. 4

0035068

Fig 5

Fig.6

## DOCUMENTS CONSIDERES COMME PERTINENTS

| Catégorie | Citation du document avec indication, en cas de besoin, des parties pertinentes | Revendication concernée |
|---|---|---|
| X | <u>DE - U - 7 513 651</u> (POGLITSCH)<br>* fig. 1, positions 1,7; fig. 1, positions 1, 4; page 9, paragraphe 1 *<br>-- | 1,2,4 |
|  | <u>FR - A1 - 2 276 542</u> (SASSONE)<br>* fig. 1 *<br>-- | 1 |
|  | ELEKTROWÄRME INTERNATIONAL, Vol. 32 No. A6, Novembre 1974 Essen H. DIEDRICH "Elektro-Zentralspeicher in Kombination mit brennstoffbefeuerten Kesseln" pages A284 à A288<br>* page A285, fig. 2 *<br>-- | 3 |
|  | DER SANITÄRINSTALLATEUR UND HEIZUNGS-BAUER, No. 2, 1976 K.H. FONCK "Elektroheizung sprengt Wachstumsgrenzen" pages 48 et 50<br>* page 48, fig. *<br>-- | 3 |
|  | <u>DE - A1 - 2 524 760</u> (RAPIDO-DINSING-WERK GMBH)<br>* revendication 1; fig. 1 *<br>-- | 6 |
|  | ./.. |  |

**CLASSEMENT DE LA DEMANDE (Int. Cl.3)**

F 24 D 11/00
F 24 D 13/04
F 24 H  1/20
F 24 D 19/10
G 05 D 23/13

**DOMAINES TECHNIQUES RECHERCHES (Int. Cl.3)**

F 24 D 11/00
F 24 D 13/00
F 24 D 19/10
F 24 H  1/00
F 24 H  9/20
G 05 D 23/13

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 16-10-1980 | PIEPER |

**Office européen des brevets**

**RAPPORT DE RECHERCHE EUROPEENNE**

0035068

Numéro de la demande

EP 80 20 0180.0

- page 2 -

| DOCUMENTS CONSIDERES COMME PERTINENTS | | | CLASSEMENT DE LA DEMANDE (Int. Cl.3) |
|---|---|---|---|
| Catégorie | Citation du document avec indication, en cas de besoin, des parties pertinentes | Revendica-tion concernée | |
| | US - A - 4 171 771 (COLTHORPE et al.)<br>* colonne 4, lignes 3 à 9 *<br>-- | 6 | |
| | DE - B2 - 2 427 641 (SATCHWELL-BIRKA REGELUNGSTECHNIK GMBH)<br>* fig. 1, positions 10, 12, 20; page 4, paragraphe 4 *<br>-- | 6,7 | |
| | DE - A - 2 021 579 (BROCKERHOFF)<br>* document complet *<br>-- | 7 | **DOMAINES TECHNIQUES RECHERCHES (Int. Cl.3)** |
| | DE - A1 - 2 348 741 (KIRN)<br>* document complet *<br>-- | 8 | |
| A | DE - B2 - 2 030 649 (EHLERT)<br>* colonnes 3 et 4 *<br>---- | 7 | |

OEB Form 1503.2  06.78